# EUROPÄISCHE PATENTSCHRIFT

(11) **EP 2 269 799 B1**
(45) Veröffentlichungstag und Bekanntmachung des Hinweises auf die Patenterteilung: **29.06.2016**
(21) Anmeldenummer: 09008607.5
(22) Anmeldetag: 01.07.2009
(51) Int. Cl.: B29C 45/17, B29C 45/27

(54) **Vorrichtung zur Herstellung stiftförmiger Endprodukte durch Spritzgiessen**
Device for manufacturing pin-shaped end products by injection-moulding
Dispositif de fabrication de produits finis en forme de crayon par moulage par injection

(43) Veröffentlichungstag der Anmeldung: 05.01.2011
(73) Patentinhaber: Lonstroff AG, 5001 Aarau (CH)
(72) Erfinder: Murena, Denis, 1789 Lugnorre (CH); Diem, Werner, 5212 Hausen (CH)
(74) Vertreter: Schaad, Balass, Menzl & Partner AG

(56) Entgegenhaltungen:
- JP-A- 11 254 486
- US-A1- 2002 190 430

## Beschreibung

Die Erfindung betrifft ein Spritzgiesswerkzeug gemäss dem Patentanspruch 1. Die Erfindung betrifft des Weiteren ein Verfahren gemäss Anspruch 16 zur Verwendung dieses Spritzgiesswerkzeugs.

Spritzgiessverfahren sind weit verbreitet, insbesondere in der Serienfertigung von Spritzgussteilen aller Art. Je nach herzustellendem Spritzgussteil sind die unterschiedlichsten Funktionen, Grössen und Formen anzutreffen.

Das Spritzgiessen erfolgt generell in einem beliebig oft wiederholbaren zyklischen Ablauf, wobei bei jedem Zyklus ein oder mehrere Spritzgussteile, nachfolgend als Nutzen bezeichnet, hergestellt werden. Es wird in eine geschlossene Kavität, gebildet durch eine in der Regel mindestens zweiteilige Hohlform und gegebenenfalls einem oder mehreren Kernen, verflüssigtes Spritzgut unter Druck eingebracht, bis die Kavität gefüllt ist, anschliessend erfolgt ein Verfestigungsprozess. Im Anschluss wird die Kavität geöffnet, der zwischenzeitlich bis zur einer stabilen Form erhärtete Nutzen entfernt, und die Hohlform wieder geschlossen.

Bei besonders kleinen Nutzen ist es zur Steigerung der Effizienz und der Stückzahl zweckmässig, das Spritzgiesswerkzeug derart auszubilden, dass es die Herstellung von mehreren Nutzen gleichzeitig in einem Zyklus ermöglicht. Durch einen, von der Aussenseite des Spritzgiesswerkzeugs bis in dessen Kavitäten führende Angusskanal ist das Spritzgut einbringbar. Ein nachgeschaltetes Angusssystem stellt die Verteilung des Spritzguts zu den einzelnen Hohlformen für die Nutzen her. Dabei wird ein sogenannter Spritzling hergestellt.

Der Anguss wird im Angusskanal ausgebildet, das Trägersystem im Angusssystem und die Nutzen in entsprechenden, mit dem Angussystem verbunden Kavitäten.

Die gesamte Kavität eines solchen Spritzgiesswerkzeugs weist somit den Angusskanal zur Ausbildung des Angusses, Nutzenkavitäten zur Ausbildung der Nutzen und eine, diese Nutzenkavitäten mit dem Angusskanal verbindende Kavität auf, welche das Trägersystem ausbildet. Diese verbindende Kavität besteht im Regelfall aus einzelnen Kanälen. In Fällen wie dem vorliegenden, bei denen viele Nutzenkavitäten nahe aneinander angeordnet sind, ist es jedoch zweckmässiger, einzelne Kanäle zusammenzufassen oder gar einen gemeinsamen Verteilraum auszubilden.

Das in der Angusskavität ausgeformte Trägersystem des Spritzlings geht in solchen Fällen von einer verästelten Struktur in eine flächige Struktur über.

In den meisten Fällen wird der gesamte Spritzling vollständig und als Ganzes entformt, indem er manuell oder mittels einer Vorrichtung aus der Kavität ausgebracht wird, um anschliessend in einem separaten Arbeitsschritt weiterbearbeitet zu werden. Dabei werden die Nutzen vom Trägersystem getrennt, wofür beim Übergang von einem Nutzen zum Trägersystem meist Stellen besonders geringer Materialstärke, sogenannte Sollbruchstellen, vorgesehen werden, sodass mit geringem Aufwand, oftmals durch blosses Reissen, Abscheren oder Knicken, der Nutzen am gewünschten Ort kontrolliert von seinem Trägersystem getrennt wird. JP-A-11-254486 beschreibt ein Spritzgiesswerkzeug mit einer Basisplattenanordnung, einer Mittenplatte und einer Nutzenplattenanordnung. Die Basisplattenanordnung weist einen Angusskanal auf, durch welchen das Spritzgut in eine Kavität gelangen kann. Die Mittenplatte liegt im geschlossenen Zustand des Spritzgiesswerkzeugs mit einer Stirnseite an der Basisplattenanordnung an und bildet eine erste Trennfläche, und liegt mit einer gegenüberliegenden Stirnseite unter Ausbildung einer zweiten Trennfläche an der Nutzenplattenanordnung an. Im geschlossenen Zustand des Spritzgiesswerkzeugs wird durch die Mittenplatte und die Basisplattenanordnung einerseits die Fellkavität, sowie andererseits durch die Mittenplatte gemeinsam mit der Nutzenplattenanordnung eine vorbestimmte Anzahl an Nutzenkavitäten ausgebildet. Nach dem Verfestigen des Spritzguts werden die Nutzen vom Fell abgetrennt, indem die Nutzenplattenanordnung von der Mittenplatte entfernt wird, d.h. indem das Spritzgiesswerkzeug in der zweiten Trennfläche geöffnet wird.

Immer wieder problematisch gestaltet sich das Entnehmen des Spritzlings aus den Kavitäten, speziell bei automatisierten Anlagen. Dieses Entnehmen wird umso komplizierter, je kleiner, komplexer und feingliedriger die Nutzen und das Trägersystem sind, und je gummiähnlicher beziehungsweise elastischer oder weicher das verspritzte Spritzgut ist. Wenn es nicht gelingt, den Spritzling als Ganzes auszuformen, so ist ein Verbleiben oder Verklemmen einzelner Bereiche in der Kavität des Spritzgiesswerkzeugs die Folge. Probleme treten beim Einspritzen auch durch eingeschlossene Restluft auf, welche die Oberflächenbildung der Nutzen stören kann.

Zudem ist auch das Trennen der einzelnen Nutzen vom gemeinsamen Trägersystem aufwendig und kompliziert zu bewerkstelligen. Hierzu ist in der Regel ein separater Arbeitsgang dem Spritzvorgang nachgeschaltet. Kleine, insbesondere gummielastische Nutzen, erschweren auch diesen Vorgang zusätzlich.

Der vorliegenden Erfindung liegt die Aufgabe zugrunde, ein Spritzgiesswerkzeug der eingangs genannten Art zu schaffen, das auf einfache Weise die Herstellung von insbesondere feingliedrigen Nutzen aus elastischen und plastischen Materialien erlaubt und weiter ein mit dem Öffnungsvorgang in Zusammenhang stehendes Trennen der Nutzen vom Trägersystem, verbunden mit einem Entformen und einem Ausbringen derselben ermöglicht, und dabei Probleme der eingangs erwähnten Art vermeidet.

Diese Aufgabe wird erfindungsgemäss durch ein Spritzgiesswerkzeug mit den Merkmalen des Anspruches 1 und einem Verfahren nach Anspruch 16 gelöst. Bevorzugte Weiterausgestaltungen des erfindungsgemässen Spritzgiesswerkzeugs bilden den Gegenstand der abhängigen Ansprüche.

Das erfindungsgemässe Spritzgiesswerkzeug weist in seiner Grundausführung drei Baugruppen auf, nämlich eine Basisplattenanordnung, eine Mittenplatte und eine Nutzenplattenanordnung. Die Basisplattenanordnung weist vorzugsweise eine Fellplatte und eine Basisplatte auf. Die Basisplatte ist dazu bestimmt, mit einem feststehenden Teil einer Spritzgiessmaschine verbunden zu sein. In der Basisplatte ist auch ein Angusskanal eingearbeitet, durch welchen das Spritzgut, im vorliegenden Fall ein Kunststoff, insbesondere ein elastomeres Material, beispielsweise kautschukbasierend, in eine Kavität gelangen kann. Das Spritzgut muss dazu in einem spritzbaren Zustand sein. Weiter weist das Spritzgiesswerkzeug die Mittenplatte auf, welche im geschlossenen Zustand des Spritzgiesswerkzeugs mit einer Stirnseite an der Basisplattenanordnung anliegt und eine erste Trennfläche bildet, und mit einer gegenüberliegenden Stirnseite unter Ausbildung einer zweiten Trennfläche an der dritten Baugruppe, der Nutzenplattenanordnung anliegt. Die Nutzenplattenanordnung und die Mittenplatte stellen die beweglichen Elemente des Spritzgiesswerkzeugs dar. Grundsätzlich kann die Mittenplatte einzeln betätigt und geführt sein, in einer vorteilhaften Ausführung ist sie an der Nutzenplattenanordnung geführt.

Im geschlossenen Zustand des Spritzgiesswerkzeugs wird durch die Mittenplatte und die Fellplatte einerseits die Fellkavität, sowie andererseits durch die Mittenplatte gemeinsam mit der Nutzenplattenanordnung eine vorbestimmte Anzahl an Nutzenkavitäten ausgebildet.

Die Fellkavität ist mit dem Angusskanal verbunden und formt gemeinsam mit diesem das Trägersystem des Spritzlings aus, welches im vorliegenden Fall einen Anguss und ein sogenanntes Fell umfasst. Die Mittenplatte und die Nutzenplattenanordnung zusammen bilden eine Anzahl an Nutzenkavitäten aus. Bevorzugt ist je Nutzenkavität der auf die Mittenplatte entfallende Oberflächenanteil deutlich kleiner als derjenige in der Nutzenplattenanordnung, in einer vorteilhaften Ausführung ist er sogar nur auf eine begrenzende Fläche, die vorzugsweise eine Stützfläche darstellt, reduziert. Die Mittenplatte weist somit an ihren beiden Stirnseiten, die in der ersten und in der zweiten Trennfläche liegen, Hohlformen auf, die jeweils für die Fell- und die Nutzenkavitäten einen Teilbereich bereitstellen, wobei die Tiefe der nutzenseitigen Hohlformen gegen null tendieren kann.

Zum Befüllen der Nutzenkavitäten sind diese Hohlformen in den beiden Trennflächen der Mittenplatte über je eine Verbindung durch die Mittenplatte hindurch mit derFellkavität verbunden. Jede Verbindung weist, ausgehend Fellkavität, über zumindest eine Teillänge eine Zulaufsenke auf und mündet in eine nutzenseitig ausgebildeten Zuflussmündung. Diese befindet sich in jenem Bereich der Nutzenkavität, welcher die Stützfläche ausbildet und ist von Vorteil zentrisch angeordnet.

Die Nutzenplattenanordnung selbst besteht aus zumindest einer Stirnformplatte und einer Schaftformplatte, wobei letztere, im geschlossenen Zustand des Spritzgiesswerkzeugs, einerseits in der zweiten Trennfläche an der Mittenplatte und andererseits an der Stirnformplatte anliegt. Die Stirnformplatte steht in fester Verbindung mit dem bewegten Teil der Spritzgiessmaschine, wohingegen die Schaftformplatte relativ hierzu um einen vorbestimmten Hub verschiebbar gelagert, vorzugsweise an der Stirnformplatte geführt, sowie gegenüber der Mittenplatte vorgespannt ist.

Die Stützflächen in den Nutzenkavitäten stützen die erzeugten Nutzen derart, dass beim Öffnen des Spritzgiesswerkzeugs in der ersten Trennfläche die Nutzen sich vom Fell trennen. Deshalb ist von Vorteil, wenn der Querschnitt jeder Stützfläche ein Mehrfaches des Zuflussquerschnittes beträgt, vorzugsweise mehr als das 10-fache des Zuflussquerschnittes. Dabei ist nach Möglichkeit der verbleibende Zuflussquerschnitt koaxial zu einem gegebenenfalls vorhandenen Kern positioniert.

Zur Herstellung von hohlen Nutzen ist in der Basisplatte je Nutzenkavität ein vorzugsweise stiftförmiger Kern fest und frei auskragend eingebracht, welcher durch die jeweilige Zuflussmündung hindurch in diese Nutzenkavität hineinragt.

Die Fellkavität besitzt vorzugsweise einen flächigen Kavitätsabschnitt, ausgehend von welchem zu jeder Zuflussmündung Zulaufsenken ausgebildet sind, welche sich zumindest partiell in Richtung der jeweiligen Zuflussmündung, und somit in Flussrichtung des Spritzguts, verjüngen.

Dies bietet mehrere Vorteile, denn zum einen kann der gegebenenfalls stiftförmige Kern auf Höhe der Fellkavität dicker ausgebildet werden, was der Stabilität zugute kommt, und zweitens kann das Spritzgut leichter zufliessen und sich gleichmässiger verteilen, vergleichbar mit einem Einfülltrichter, wodurch eine schnellere Füllung erreicht und ungleichmässige Belastungen auf den Kern weitgehend vermieden werden. Besonders bei filigranen Hohlteilen, die - wie im vorliegenden Fall - eine hohe Präzision erfordern, sind, aufgrund der hohen Drücke und schnellen Fliessgeschwindigkeiten, die auftretenden Druckunterschiede bei ungleichmässiger Befüllung der Nutzenkavitäten zu berücksichtigen beziehungsweise möglichst zu vermeiden.

Bevorzugt wird vor dem Einspritzen des Spritzguts durch eine externe Einrichtung die in den Kavitäten des geschlossenen Spritzgiesswerkzeugs vorhandene Luft entfernt, um ein niedrigeres Druckniveau zu erreichen und den Einspritzvorgang zu erleichtern. Hierzu ist eine Vakuumquelle mit einem in die gemeinsame Fellkavität mündenden Unterdruckkanal verbunden, wodurch Luft bis unmittelbar vor dem Einspritzvorgang ausgebracht werden kann. Dank eines vorzugsweise vorhandenen Schliessventils, welches durch das Spritzgut selbst in Schliessstellung gebracht wird, wird ein Eindringen des Spritzguts in den Unterdruckkanal beim Spritzvorgang verhindert.

Beim Einspritzen wird von der Spritzgiessmaschine aufbereitetes Spritzgut in erhitztem und verflüssigtem, bevorzugt niedrig-viskosem, Zustand durch den Angusskanal in die Fellkavität und von dieser in alle Nutzenkavitäten eingespritzt, wodurch der zusammenhängende Spritzling, aufweisend einen Anguss, ein in der Fellkavität erzeugtes Fell und die in den Nutzenkavitäten erzeugten Nutzen, entsteht. Dabei wird unmittelbar zu Beginn durch das durch den Angusskanal in die Fellkavität eintretende Spritzgut das vorzugsweise vorhandene Schliessventil in Schliessstellung gebracht. Um einen schnellen und vollständigen Füllvorgang zu erreichen, erfolgt das Einspritzen unter ausreichend hohem Druck, welcher vom Widerstand der Kavitäten sowie der Zähigkeit des Spritzguts abhängt, und vorzugsweise in die vorgängig unter Vakuum gesetzten Kavitäten.

Im Anschluss daran wird der Spritzling zum Beispiel bei Verwendung eines thermoplastischen Elastomers bis zum Erreichen eines formstabilen Zustandes abgekühlt, oder beispielsweise bei Verwendung eines gummiartigen Werkstoffs erwärmt, wobei jeweils in bevorzugter Weise ein vorbestimmter Druck aufrecht erhalten wird, um das gewünschte Ergebnis zur erreichen. Ein allfällig notwendiges Abkühlen erfolgt durch Wärmeübertragung auf das Spritzgiesswerkzeug, eventuell unterstützt durch zusätzliche Gaskonvektion oder unter Verwendung von Kühlflüssigkeit. Bei einer allfällig notwendigen Erhitzung, beispielsweise zu Zwecken einer Polymerisation, kann das Spritzgiesswerkzeug zusätzlich erhitzt werden. Das Spritzgiesswerkzeug verbleibt dabei solange unbewegt und unverändert, bis der Spritzling einen ausreichend formstabilen Zustand erreicht hat.

In bevorzugter Weise wird vor dem Abformen der Nutzenplattenanordnung an den freien Enden, bei ansonsten geschlossenem Spritzgiesswerkzeug, die Stirnformplatte derart abgehoben, dass zwischen ihr und der Schaftformplatte ein Spaltraum ausgebildet ist, der gegen die Umgebung abgedichtet ist. Da ein Druckluftkanal durch die Stirnformplatte in den Spaltraum führt, durch welchen von ausserhalb des Spritzgiesswerkzeugs der Druck im Spaltraum erhöht werden kann, ist das Entformen der Nutzen aus der Nutzenkavität erleichtert und die Nutzenplattenanordnung in der zweiten Trennfläche als Ganzes abhebbar.

Die Mittenplatte ist vorzugsweise mit einem Antrieb versehen. Dadurch kann die Mittenplatte in der ersten Trennfläche von der Basisplattenanordnung abheben und einen bestimmt Hubweg zurücklegen, welcher vorteilhafterweise grösser ist als die Länge der auskragenden Abschnitte der gegebenenfalls vorhandenen Kerne. Sobald das Abheben der Mittenplatte von der Fellplatte und somit ein Öffnen des Spritzgiesswerkzeugs in der ersten Trennfläche erfolgt, trennt die Mittenplatte mit ihren Stützflächen sämtliche Nutzen wenigstens annähernd simultan vom Fell des restlichen Spritzlings in der Ebene der Stützflächen ab, und ermöglicht aufgrund ihres ausreichend langen, vordefinierten Hubweges ein Abstreifen der Nutzen von den jeweiligen Kernen.

Da die Fellkavität nun automatisch mitgeöffnet wird, wird die Gegenkraft durch das in der statischen Kavitätshälfte - der Basisplattenanordnung - verbleibende Fell vorzugsweise alleine durch Reibungs- und Adhäsionskräfte zwischen ihm und der Oberfläche dieses Kavitätsbereiches bewerkstelligt werden.

Dadurch ist bedingt, dass derjenige Teil der Fellkavität, der in der Basisplatte ausgebildet ist, derart ausgeformt ist, dass vorzugsweise ohne Ausbildung von Formschluss aufgrund der Formgebung auf das Fell resultierende Reib- und Adhäsionskräfte wirksam sind, die grösser als diejenigen des Teilbereichs der Fellkavität in der Mittenplatte plus der notwendigen Kräfte zum Abriss der Nutzen sind.

Im Anschluss kann das Fell samt Anguss aus der Fellkavität herausgenommen und von den Kernen abgezogen werden. Um dies zu erleichtern kann bei der Basisplattenanordnung derjenige Teil, in welchem der angussseitige Teil des Felles eingeformt ist, an dem restlichen Teil beweglich angeordnet sein.

Nach dem Ausformen sämtlicher Elemente des Spritzlings werden die Platten des Spritzgiesswerkzeugs wieder in eine zueinander feste Anlage gebracht, das Spritzgiesswerkzeug ist geschlossen und bereit für den nächsten Zyklus. Sämtliche Bewegungen verlaufen vorzugsweise translatorisch und parallel zueinander.

Das Betätigen der einzelnen Platten über einen einzelnen Zyklus hinweg erfolgt vorzugsweise sequentiell, wobei sich die einzelnen Sequenzen aus Effizienzgründen auch überlagern können.

Die vorliegende Erfindung wird nachfolgend anhand eines in der Zeichnung dargestellten Ausführungsbeispiels näher beschrieben. Es zeigen rein schematisch
- Fig. 1: eine Ansicht eines Schnittes durch ein erfindungsgemässes Spritzgiesswerkzeug mit einem fertigen Spritzling in geschlossenem Zustand vor der Entformung;
- Fig. 2: eine Schnittansicht des Spritzgiesswerkzeugs gemäss Fig. 1 nach einem Trennen der Nutzenplattenanordnung in der zweiten Trennfläche;
- Fig. 3: eine Schnittansicht des Spritzgiesswerkzeugs gemäss Fig. 2 mit von der Basisplattenanordnung abgehobener Mittenplatte;
- Fig. 4: eine Schnittansicht des Spritzgiesswerkzeugs gemäss Fig. 3 in Offenstellung mit zusätzlich durch ein Abheben der Fellplatte getrennter Basisplattenanordnung in Offenstellung;
- Fig. 5: eine Ansicht eines Nutzens in einer Nutzenkavität mit einem stiftförmigen Kern, Teilen des Felles und Teilen des geschlossenen Spritzgiesswerkzeugs; und
- Fig. 6: die Fellplatte in einer Frontalansicht.

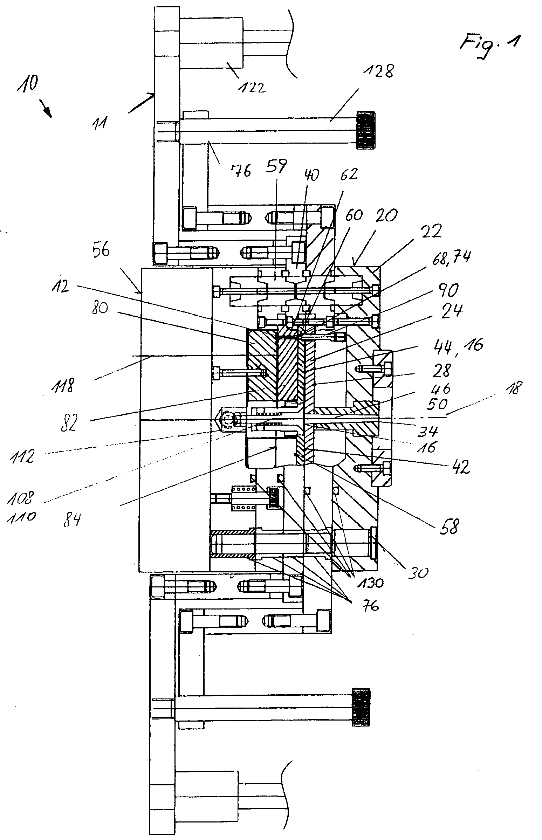

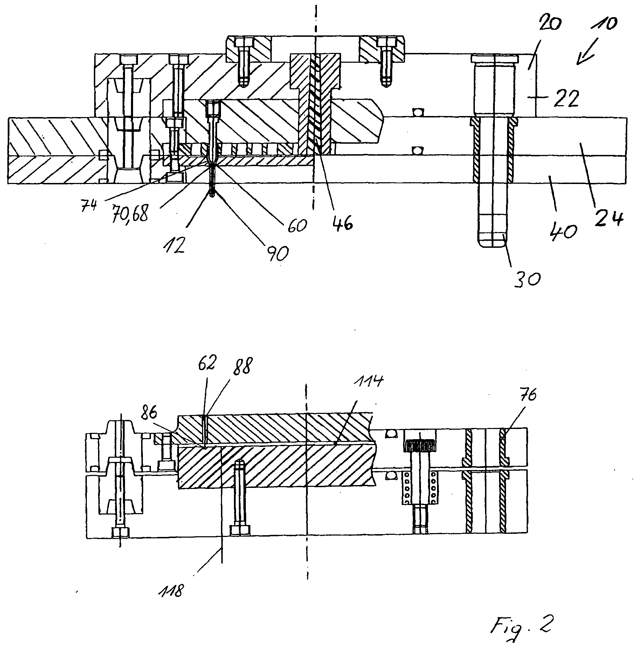

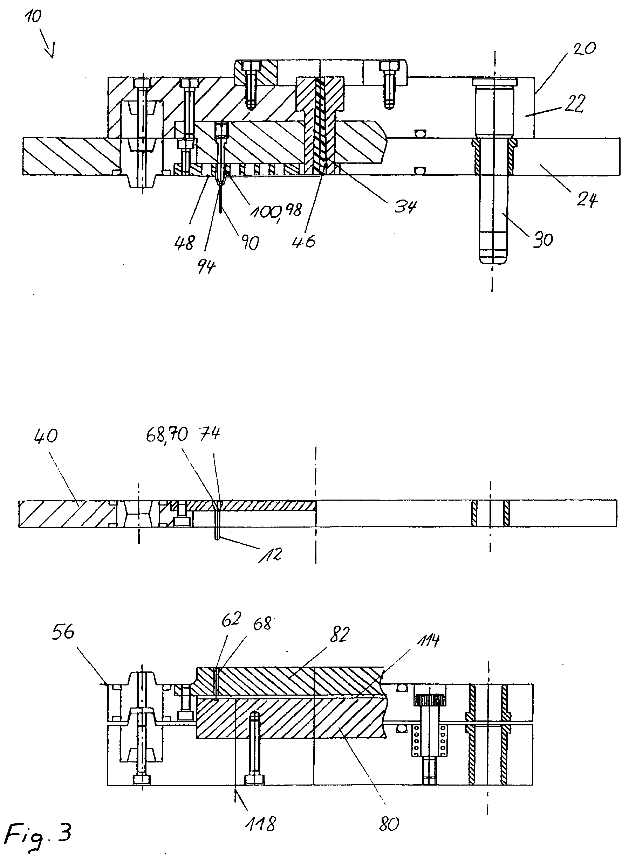

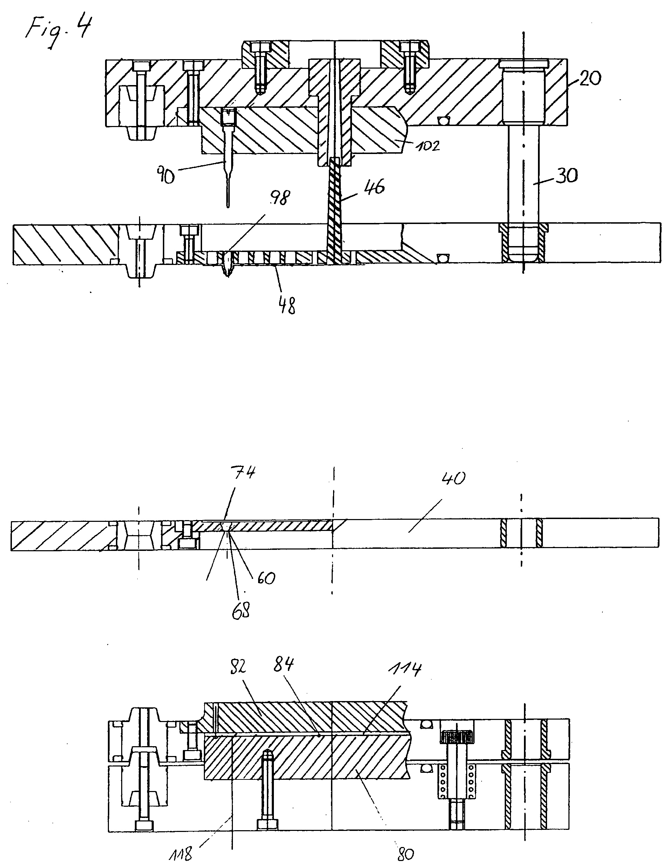

Die Figuren 1 bis 4 zeigen Ansichten eines gegenständlichen Spritzgiesswerkzeugs 10 in einer besonders bevorzugten Ausführungsform in verschiedenen Verfahrensstadien. Die Figur 1 zeigt eine Ansicht eines gegenständlichen Spritzgiesswerkzeugs 10 in einer besonders bevorzugten Ausführungsform in geschlossenem Zustand, die Figur 2 zeigt eine Ansicht des Spritzgiesswerkzeugs 10 aus Fig. 1 in einem ersten teilgeöffnetem Zustand, die Fig. 3 zeigt das Spritzgiesswerkzeug 10 in einem zweiten teilgeöffneten Zustand, Fig. 4 zeigt das Spritzgiesswerkzeug 10 in einer totalen Offenstellung. In Fig. 1 sind zusätzlich wesentliche Elemente einer externen Betätigungseinrichtung 11 dargestellt.

Ziel des gegenständlichen Spritzgiesswerkzeugs 10 ist die Herstellung einer grösseren Anzahl stiftförmiger Endprodukte, sogenannter Nutzen 12, das Abtrennen von ihrem Trägersystem 16 und das Ausbringen derselben in einem einzigen Zyklus.

Fig. 1 zeigt dieses Spritzgiesswerkzeug 10 in geschlossener Stellung in einem Vollschnitt mit horizontal ausgerichteter Zentrumsachse 18 sowie Teile einer externen Betätigungseinrichtung 11. Sämtliche Bewegungen der nachfolgend angeführten Komponenten des Spritzgiesswerkzeugs 10 erfolgen zumindest annähernd translatorisch und parallel zu dieser Zentrumsachse 18.

Das Spritzgiesswerkzeug 10 selbst ist zur Verwendung in üblichen Spritzgiessmaschinen geeignet und umfasst in der vorliegenden Ausführungsform drei wesentliche Baugruppen.

Die erste Baugruppe wird durch eine Basisplattenanordnung 20 gebildet, welche fest mit einer hier nicht dargestellten Spritzgiessmaschine verbunden ist. Diese Basisplattenanordnung 20 umfasst eine Basisplatte 22 und eine Fellplatte 24. Die Basisplatte 22 stellt die Schnittstelle zwischen dem Spritzgiesswerkzeug 10 und der statischen Seite der Spritzgiessmaschine bereit und nimmt an ihrer gegenüberliegenden Stirnfläche 28 die Fellplatte 24 auf.

Diese Fellplatte 24 liegt flächig an der Basisplatte 22 an. Während die Basisplatte 22 fest mit der Spritzgiessmaschine verbunden ist, ist die Fellplatte 24 an Führungssäulen 30, welche parallel zur Zentrumsachse 18 an der Basisplatte 22 angebracht sind, translatorisch geführt. Diese Führungssäulen 30 garantieren eine exakte Bewegung der Fellplatte 24 relativ zur Basisplatte 22.

Die Basisplatte 22 kann, wie in Fig. 1 ersichtlich, ebenfalls mehrteilig ausgeführt sein, allerdings sind hierfür konstruktive Merkmale massgeblich, für die Funktion ist dies ohne Relevanz.

Weiter weist die Basisplatte 22 einen Angusskanal 34 zur Zufuhr von Spritzgut auf. Der Angusskanal 34 ist vorteilhaft - wie in den Fig. 1 bis 3 dargestellt - koaxial zur Zentrumsachse 18 angeordnet. Er ist zentrisch in einer Angussbüchse ausgeformt, welche sowohl durch die Basisplatte 22 als auch durch die Fellplatte 24 geführt ist. Es sind jedoch auch alternative Möglichkeiten zur Anordnung des Angusskanals 34 denkbar. An jener Stirnseite der Fellplatte 24, die der Basisplatte 22 abgewandt gelegen ist, steht die Fellplatte 24 in flächigem Kontakt mit einer Mittenplatte 40 als Teil einer zweiten Baugruppe, wodurch eine erste Trennfläche 42 definiert ist. Die Mittenplatte 40 kann separat geführt sein, in dieser vorteilhaften Ausführung ist sie dank Bohrungen an der Basisplatte 22 analog zur Fellplatte 24 an den Führungssäulen 30 geführt und parallel zur Zentrumsachse 18 verschiebbar, wodurch eine exakte Ausrichtung der Mittenplatte 40 zu der Fellplatte 24 gewährleistet ist.

Die Mittenplatte 40 und die Fellplatte 24 bilden gemeinsam eine Fellkavität 44 aus, in welche der Angusskanal 34 mündet. Diese Fellkavität 44 stellt gemeinsam mit dem Angusskanal 34 die Hohlform für das Trägersystem 16 des zu formenden Spritzlings 50, umfassend einen Anguss 46 und ein flächiges, rotationssymmetrisches Fell 48, bereit. Die Fellkavität 44 ist im Bereich der ersten Trennfläche 42 flächig und dünnwandig ausgebildet, und dient der Verteilung des einzubringenden Spritzguts.

Die in den Fig. 1 und 2 in Anlage befindliche Mittenplatte 40 ist in den Fig. 3 und 4 in abgehobenem, und somit geöffnetem, Zustand dargestellt.

Im geschlossenen Zustand des Spritzgiesswerkzeugs 10 gemäss Fig. 1 befindet sich die Mittenplatte 40 eingespannt zwischen der Basisplattenanordnung 20, mit welcher sie die erste Trennfläche 42 definiert, und einer Nutzenplattenanordnung 56 als dritte Baugruppe, mit welcher sie eine zweite Trennfläche 58 ausbildet.

Weiter sind je Platte 22, 24, 40, 80, 82 mindestens ein Paar sogenannter Zentrierkonen 59 achsparallel und von einer Stirnseite zur jeweils gegenüberliegenden Stirnseite durchgängig eingebracht. Dabei greift jede Zentrierkone 59 mit jeder Stirnseite in die benachbarten Zentrierkonen 59 ein und bewirkt dabei eine Feinzentrierung, die zu einander gehörenden Zentrierkonen 59 liegen in einer genauen Flucht.

Die Zentrierkonen 59 wirken im Gegensatz zu den Führungssäulen 30 nicht über den gesamten Hub, sondern übernehmen nur eine zusätzliche Genaupositionierung im letzten Hubabschnitt kurz vor der gegenseitigen Anlage der jeweils zueinander gewandten Stirnseiten benachbarter Platten 22, 24, 40, 80, 82 des Spritzgiesswerkzeugs 10, und erhöhen die Fluchtgenauigkeit derselben zusätzlich.

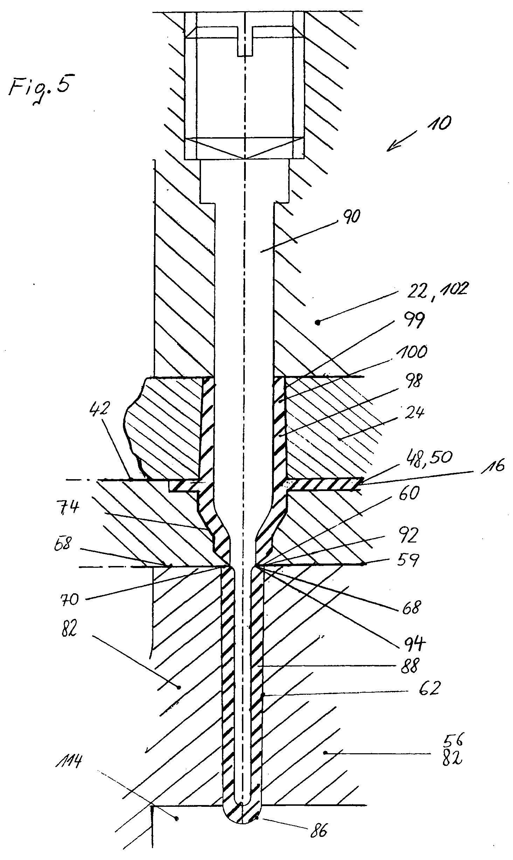

Die Nutzenplattenanordnung 56 weist in Richtung der zweiten Trennfläche 58 eingeformte Nutzenhohlformen auf, welche im vorliegenden Fall einem Sackloch mit sphärischem Boden entsprechen, zueinander in Form und Dimension identisch und parallel zur Zentrumsachse 18 sowie systematisch zu dieser angeordnet sind. Diese Nutzenhohlformen münden in die zweite Trennfläche 58 und sind durch die Mittenplatte 40 begrenzt. Grundsätzlich ist es denkbar, dass die Mittenplatte 40 entsprechende Hohlformen mit deckungsgleichen Konturen als passende Gegenformen aufweist, im vorliegenden Fall sind diese Hohlformen jedoch nicht speziell ausgebildet, sondern sind in ihrer Tiefe auf null reduziert und sind somit durch eine gemeinsame Planfläche gebildet, welche mit der zweiten Trennfläche 58 im geschlossenen Zustand zusammenfällt. Somit ist bei Anlage der Nutzenplattenanordnung 56 an der Mittenplatte 40 jede Nutzenhohlform an ihrem offenen Ende durch je einen Teilbereich der Planfläche, im Folgenden als Stützfläche 60 bezeichnet, begrenzt. Somit ist durch jede Nutzenhohlform in Verbindung mit je einer der Stützflächen 60 eine Nutzenkavität 62, wie in den Fig. 1 bis 4 und detailliert in Fig. 5 dargestellt, zur Herstellung der Nutzen 12 ausgebildet. Diese Nutzenkavitäten 62 schliessen jeweils an eine Zuflussmündung 68 an, welche zentrisch in ihre jeweilige Stützfläche 60 mündet und diese auf eine Kreisringfläche reduziert.

Diese ringförmige Stützfläche 60 einer jeden Nutzenkavität 62 hat die Aufgabe, beim Entformvorgang, zu dessen Beginn sie auch ein Trennen des zugehörigen Nutzens 12 vom gemeinsamen Fell 48 bewerkstelligt, den Nutzen 12 an seiner Nutzenstirnseite 70 ausreichend zu stützen, damit eine gewisse Flächenpressung nicht überschritten wird.

Die Nutzenkavitäten 62 sind im vorliegenden Fall jeweils untereinander parallel ausgerichtet und sind in Form und Dimension identisch, jedoch ist dies für die vorliegende Erfindung nicht notwendigerweise Voraussetzung.

Jede Nutzenkavität 62 ist im Bereich ihrer Stützfläche 60 via der zugehörigen Zuflussmündung 68 mit der gegenüberliegenden Seite der Mittenplatte 40 und der dort befindlichen Fellkavität 44 über eine Zulaufsenke 74 verbunden.

Die Zuflussmündungen 68 sind jeweils konzentrisch zu ihrer Nutzenkavität 62 angeordnet. Die Zulaufsenken 74 sind achsparallel zur Zentrumsachse 18 ausgerichtet und verjüngen sich in Richtung der Zuflussmündungen 68 über den Grossteil ihre Tiefe. Die konische Ausformung der Zulaufsenken 74 bewirkt, dass Spritzgut, welches ausgehend vom Angusskanal 34 im flächigen Bereich der Fellkavität 44 verteilt wird, möglichst gleichmässig und unter möglichst geringen Widerständen in die Zulaufsenken 74 fliesst, an den Zuflussmündungen 68 aus der Fellkavität 44 aus- und in die Nutzenkavitäten 62 eintreten kann.

Anstelle der Ausbildung einer flächigen Fellkavität 44 als Hohlform für das Trägersystem 16 wären - speziell bei einer geringeren Anzahl an herzustellenden Nutzen - auch einzelne Kanäle, ausgehend vom Angusskanal 34 und endend bei den Zulaufsenken 74, denkbar. Der verlorene Anteil an Spritzgut für die Mitformung des Trägersystems 16 wäre dadurch reduziert, speziell in Fällen bei denen verfestigtes Spritzgut nicht mehr recycelbar ist. Im vorliegenden Fall ist die dargestellte Ausführung aufgrund der zahlreich verteilten Nutzenkavitäten 62 jedoch zweckmässiger.

Die Nutzenplattenanordnung 56 ist am bewegbaren Teil der Spritzgiessmaschine angeordnet, wird von dieser linear bewegt, und benötigt keine weitere Zwangsführung. Wie in den Fig. 1 bis 3 dargestellt, sind jedoch Buchsen 76 analog zur Mittenplatte 40 vorhanden, welche ein Einfahren der Führungssäulen 30 beim Schliessen des Spritzgiesswerkzeugs 10 vor Erreichen der Endstellung erlauben, mit dem Ziel einer exakten Ausrichtung sämtlicher bewegter Elemente zueinander. Die Nutzenplattenanordnung 56 ist im Wesentlichen zweiteilig und besteht aus einer Stirnformplatte 80 als Grundkörper, welcher am beweglichen Teil der Spritzgiessmaschine angebracht ist, sowie einer Schaftformplatte 82. Diese Schaftformplatte 82 ist von der Stirnformplatte 80 getragen und relativ zu ihr linear und parallel zur Zentrumsachse 18 verschiebbar angeordnet.

Eine dazwischen liegende Trennebene 84 ist ebenfalls parallel zu der ersten und zweiten Trennfläche 42, 58 ausgerichtet und dabei von der zweiten Trennfläche 58 derart beabstandet, dass die mündungsabgewandten Kopfbereiche 86 der Nutzenkavitäten 62 in der Stirnformplatte 80 ausgebildet sind.

Im vorliegenden Fall ist, wie in Fig. 5 gezeigt, der Anteil der Nutzenkavität 62 in der Mittenplatte 40 auf die in der - in diesem Fall ebenen - zweiten Trennfläche 58 liegende Stützfläche 60 reduziert. Es wäre jedoch denkbar, dass auch ein Teil des Schaftbereiches 88 der Nutzenkavität 62 in der Mittenplatte 40 ausgeformt wäre. Im vorliegenden Fall ist dieser gesamte Schaftbereich 88 der Nutzen 12 in der Schaftformplatte 82 untergebracht.

Bei verschiedenartig geformten oder unterschiedlich grossen Nutzen 12 könnte die zweite Trennfläche 58 mehrere Teilflächen aufweisen, welche nicht zwingend in einer gemeinsamen Ebene, wie im vorliegenden Fall, liegen müssen.

In den Fig. 1 bis 3 ist die Stirnformplatte 80 analog zur Basisplatte 22 ebenfalls mehrteilig dargestellt, jedoch ist die Mehrteiligkeit ist nur konstruktiv bedingt, eine einteilige Ausführung wäre denkbar.

Da im vorliegenden Fall die Nutzen 12 mit Innenbohrung herzustellen sind, sind in den einzelnen Nutzenkavitäten 62, wie speziell in Fig. 5 oder in den Fig. 1 bis 3 gezeigt, stiftförmige Kerne 90 eingebracht. Die Kerne 90 ragen frei durch die jeweilige Zulaufsenke 74 der Fellkavität 44 und durch die Zuflussmündung 68 in die Nutzenkavität 62 hinein. Die Kerne 90 sind einseitig in der Basisplatte 22 eingespannt und sind jeweils koaxial zur der Zulaufsenke und insbesondere zu der jeweiligen Nutzenkavität 62 ausgerichtet.

Da in diesem Fall der Nutzen 12 stirnseitig geschlossen ist und keine Durchgangsbohrung aufweist, müssen die Kerne 90 frei auskragen.

Fig. 5 zeigt, dass sich der Kern 90 im besonders kritischen Bereich der Zuflussmündung 68 sehr nah an deren Kontur annähert, und nur ein sehr geringer, kreisförmiger Zuflussquerschnitt 92 übrig bleibt, durch welchen Spritzgut von der Fellkavität 44 in die Nutzenkavität 62 fliessen kann. Der fertige Spritzling 50 besitzt somit an diesen Stellen jeweils eine nur sehr geringe Materialstärke, wodurch automatisch eine Sollbruchstelle 94 zwischen Nutzen 12 und Fell 48 ausgebildet ist.

Diese Form der Zulaufsenken 74 hat mehrere Vorteile, denn zum einen kann der stiftförmige Kern 90 im Bereich der Fellkavität 44 dicker ausgebildet sein, was seiner Stabilität zugute kommt, und zweitens kann das Spritzgut leichter zufliessen und sich gleichmässiger verteilen. Da der Kern 90 im Bereich der Zulaufsenke 74 mit seiner Längskontur derjenigen der Zulaufsenke 74 unter Einhaltung eines Mindestabstandes folgt, ist dazwischen eine Art Trichter mit Innenkern ausgebildet, durch den das zugeführte Spritzgut mit einer drallähnlichen Bewegung überlagert wird, und so gleichmässiger in die jeweilige Nutzenkavität 62 einfliessen kann. Dadurch wird ein gleichmässigerer, homogenerer Füllvorgang erreicht und in gleichzeitig ungleichmässige radiale Belastungen auf den Kern 90 vermindert. Besonders bei filigranen Hohlteilen, wie dem Nutzen 12 im vorliegenden Fall, welche eine hohe Präzision erfordern, sind aufgrund der hohen Drücke und hohen Fliessgeschwindigkeiten die auftretenden Druckunterschiede bei ungleichmässiger Befüllung der Nutzenkavitäten 62 zu berücksichtigen, da die Gefahr eines Verbiegens der filigranen Kerne 90, verbunden mit einem nicht mehr symmetrischen Füllvorgang, oder gar die Gefahr eines Bruches derselben, besteht.

Dabei ist nach Möglichkeit der verbleibende Zuflussquerschnitt 92 koaxial zum Kern 90 positioniert und klein im Verhältnis zu der umgebenden Stützfläche 60. Allerdings muss die Dimension seines Zuflussquerschnitts 92 ausreichend gross sein, um den notwendigen Durchfluss an Spritzgut bei entsprechendem Widerstand zu gewährleisten.

So ist in Fig. 5 erkennbar, dass der Querschnitt der Stützfläche 60 ein Mehrfaches des Zuflussquerschnittes 92 beträgt, im vorliegenden Fall beträgt die Stützfläche 60 mindestens das 5-fache, vorzugsweise mehr als das 10-fache des Zuflussquerschnittes 92, welcher einen Kreisring von hier etwa 0.1 mm ausbildet. In Abhängigkeit vom Spritzgut und Funktion, kann der Kreisring auch ein andere Grösse aufweisen.

Der Zuflussquerschnitt 92 definiert die Lage der Sollbruchstelle 94 für den Nutzen 12, es wird daher angestrebt, diesen möglichst gering zu halten. Im vorliegenden Fall fällt die Ebene der Sollbruchstelle 94 mit der zweiten Trennfläche 58 zusammen.

Weiter ist in Fig. 5 eine Hohlnoppe 98 als Anformung des Felles 48 dargestellt. Diese sind nicht in jedem Fall notwendig, jedoch unterstützen sie aufgrund ihres zu den Zulaufsenken 74 praktisch kongruenten Querschnitts den Mischvorgang. Weiter erhöhen sie die Summe der Oberflächen der Fellkavität 44 in Bewegungsrichtung der Mittenplatte 40, was sich erhöhend auf die Haftbarkeit des eingespritzten Felles 48 in dessen Fellkavität 44 auswirkt und im vorliegenden Fall erwünscht ist. Gebildet werden die Hohlnoppen 98 in Ringspalten 100, welche Teil der Fellkavität 44 sind und praktischerweise am Umfang des Kerns 90 ausgebildet werden, indem die notwendigen, durchgängigen Fellbohrungen 99 für die Kerne 90 in der Fellplatte 24 entsprechend grösser ausgeführt sind, sodass je ein Hohlraum in Form eines Kreisringzylinders, und somit der Ringspalt 100, gebildet ist. Begrenzt sind diese Ringspalte 100 stirnseitig durch die Basisplatte 22. Somit werden beim Einfliessen von Spritzgut die Ringspalte 100 ebenfalls ausgefüllt und dadurch zeitgleich mit dem Spritzen des Felles 48 mitgebildet. Somit ist unter ausschliesslicher Ausbildung von Reibschluss ein ausreichender Widerstand zwischen Fell 48 und der Hohlform in der Fellplatte 24 gegeben. Jedoch sind anstelle der Ringspalte 100 auch alternative, zweckgleiche Ausprägungen denkbar.

Weiter ist in den Fig. 1 bis 3 und 5 gezeigt, dass die Kerne 90 von der Rückseite eines Kernträgers 102 der Basisplatte 22 aus montierbar sind, was konstruktive Vorteile mit sich bringt. Der Kernträger 102 ist Teil der Basisplatte 22 trägt sämtliche Kerne 90, welche von seiner Rückseite durch Fellbohrungen 99 in der Fellplatte 24 hindurch eingeschoben und mittels Gewindestiften an Innengewinden im Kernträger 102 fixiert sind. Somit kann, beispielsweise zu Reparaturzwecken, der Kernträger 102 einfach entfernt und getauscht werden, ohne dass die gesamte Basisplatte 22 beim Tausch von der Spritzgiessmaschine abgenommen werden muss. Hierzu können die zur Demontage des Kernträgers 102 direkt oder indirekt zu betätigenden Verbindungsschrauben aufgrund praktischer Erfordernisse auch anders angeordnet sein, als in den Fig. 1-4 dargestellt.

In der Nutzenplattenanordnung 56 ist koaxial zur Zentrumsachse 18 ein Schliessventil 108 mit einem Tellerstössel 110 angebracht, welches durch die Mittelplatte 40 in den Oberflächenbereich der Fellkavität 44 reicht. An diesem Schliessventil 108 ist über einen Unterdruckkanal 112 eine nicht dargestellte Vakuumquelle angeschlossen, durch welche die in den Kavitäten 44, 62 des geschlossenen Spritzgiesswerkzeugs 10 vorhandene Luft abgesaugt werden kann, um so ein niedrigeres Druckniveau, im Idealfall Vakuum, bereitstellen zu können. Damit ist der Einspritzvorgang erleichtert und das Spritzergebnis deutlich verbessert.

Hierzu befindet sich das Schliessventil 108 in Offenstellung, die seine Grundstellung darstellt, indem der Tellerstössel 110 federgestützt in die Fellkavität 44 ragt und die enthaltene Luft ausbringbar ist. Der Tellerstössel 110 hat die Aufgabe, das Schliessventil 108 an seinem Sitz gegenüber der Fellkavität 44 abzudichten und dem Druck in der Fellkavität 44 standzuhalten. Deshalb öffnet der Tellerstössel 110 nur in Richtung der Fellkavität. Da der Tellerstössel 110 annähernd fluchtend zum Angusskanal 34 ausgerichtet ist, trifft einströmendes Spritzgut auf den Teller des Tellerstössels 110 und schliesst automatisch das Schliessventil 108.

Ist bei der Nutzenplattenanordnung 56 die Stirnformplatte 80 relativ zur Schaftformplatte 82 abgehoben, so ist zwischen beiden ein Spaltraum 114 ausgebildet, dessen umgebender Spalt im Randbereich gegen die Umgebung zumindest nahezu dicht ist. Weiter ragen die Nutzen 12 mit ihren Kopfbereichen 116 in diesen Spaltraum 114 hinein. In diesen führt auch ein Druckgaskanal 118 von aussen durch die Stirnformplatte 80 in den Spaltraum 114 hinein, durch welchen von ausserhalb des Spritzgiesswerkzeugs 10 der Druck im Spaltraum 114 erhöht werden kann. Dies unterstützt den Entformvorgang der Nutzen 12 aus den Nutzenkavitäten 62 beim Abheben der Schaftformplatte 82.

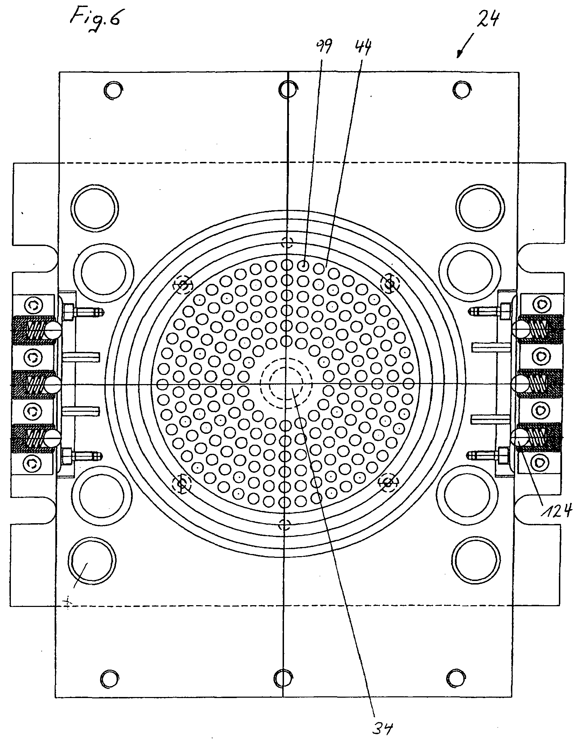

Fig. 6 zeigt eine hohlformseitige Draufsicht auf die Fellplatte 24. Dabei ist zentrisch die Mündung des Angusskanals 34 eingezeichnet sowie der flächige Bereich der Fellkavität 44, welcher im vorliegenden Fall eine kreisrunde Begrenzung aufweist. Alternativ wäre auch eine andere Form, beispielsweise eine quadratische Begrenzung möglich, jedoch stellt eine kreisrunde Ausführung einen gleichmässigen Füllvorgang beim Einspritzen sicher. Weiter sind die in der Fellplatte 44 vorhandenen Fellbohrungen 99 sichtbar, durch welche die Kerne 90 unter Einhaltung des Ringspaltes 100 von der Rückseite in die Fellkavitäten 44 eindringen. Die Anordnung und Zahl der Fellbohrungen 99 entspricht derjenigen der Nutzenkavitäten 62.

Während die Nutzenplattenanordnung 56 gesamthaft durch die Spritzgiessmaschine betätigt wird, erfolgt die Betätigung der Mittenplatte 40 durch eine externe Betätigungseinrichtung 11. Dies weist Aktuatoren, im vorliegenden Fall Mittenplattenzylinder 122, auf, welche im Randbereich an Verlängerungen der Mittenplatte 40 wirken. Die Fellplatte 24 ist durch eine Widerstandseinrichtung 124, welche im vorliegenden Fall - wie in Fig. 6 ersichtlich - über federbetätigte Kugeln realisiert ist, bis zu einer gewissen Grenzkraft in belasteter Anlage an der Basisplattenanordnung 20 gehalten. Sie wird erst ab einem bestimmten Hubweg durch sogenannte Hubbegrenzer 128, welche fest mit der Mittenplatte 40 in Verbindung stehen, translatorisch in Bewegung versetzt und so von der Basisplattenanordnung 20 abgehoben. Alternativ zu den Mittenplattenzylindern 122 sind auch andere pneumatische, hydraulische, elektrische oder elektromechanische Antriebe denkbar.

Die Bewegung zwischen Stirnformplatte 80 und Schaftformplatte 82 kann hydraulisch, mechanisch oder mittels Druckluft erfolgen, sobald keine Anpresskraft durch die Spritzgiessmaschine 10 mehr wirkt.

Die nachfolgend angeführten Verfahrensschritte beschreiben einen einzelnen Zyklus, in welchem ein Exemplar des Spritzlings 50 hergestellt wird. Im Anschluss an einen Zyklus beginnt erneut ein gleichartiger Zyklus und die Verfahrensschritte werden erneut durchlaufen.

Das Betätigen der einzelnen Komponenten des Spritzgiesswerkzeugs 10 über einen gesamten Zyklus hinweg erfolgt grundsätzlich sequentiell, wobei sich die einzelnen Sequenzen zur Verkürzung der Zykluszeiten auch überschneiden können.

Das Verfahren unter Verwendung des genannten Spritzgiesswerkzeugs 10 erlaubt die Herstellung der Nutzen 12 sowie deren Abtrennen vom restlichen Spritzling 50 als auch die Ausbringung der Nutzen 12 in einem einzigen Zyklus.

Zu Beginn des Zyklus ist das Spritzgiesswerkzeug 10 geschlossen, die Nutzenplattenanordnung 56 und die Basisplattenanordnung 20 liegen an der Mittenplatte 40 in der ersten und zweiten Trennfläche 42 und 58 an. Der Anpressdruck in der ersten und zweiten Trennfläche 42, 58 wird durch die Spritzgiessmaschine auf die Nutzenplattenanordnung 56 aufgebracht, die Mittenplattenzylinder 122 sind vorzugsweise kraftlos. Sie können jedoch auch unter Kraft stehen, um die Mittenplatte 40 gegen die Basisplattenanordnung 20 zu drücken.

Dadurch sind auch sämtliche Kavitäten 44 und 62 geschlossen, eingangsseitig am Angusskanal 34 besteht aufgrund des in der Zuführeinrichtung der Spritzgiessmaschine vorhandenen Spritzguts, sowie allfälligen Dichtungen 130 zwischen bewegten Bauteilen, Dichtheit gegenüber der Umgebung, in den untereinander verbundenen Kavitäten 44, 62 befindet sich eingeschlossene Umgebungsluft zu Atmosphärendruck. Das Schliessventil 108 wird durch eine Druckfeder in unbetätigtem Zustand in Offenstellung gehalten.

In einem ersten Verfahrensschritt wird nun via Schliessventil 108 durch den Unterdruckkanal 112 die eingeschlossene Luft bestmöglich aus den Kavitäten 44, 62 abgesaugt, um zumindest einen vakuumähnlichen Zustand zu erreichen. Dieser Vorgang könnte entfallen, falls das Spritzgiesswerkzeug 10 in einer Vakuum- oder Niederdruckumgebung betrieben wird.

In einem zweiten Verfahrensschritt wird Spritzgut durch den Angusskanal 34 eingebracht, welcher mit hoher Geschwindigkeit in die Fellkavität 44 strömt und dort auf den Teller des Schliessventil 108 trifft, wodurch der zentrisch auftreffende Spritzgutstrom in radiale Richtungen umgelenkt wird. Gleichzeitig erfolgt durch den auftretenden Staudruck, der sich aufgrund der Einströmgeschwindigkeit beim Auftreffen des Spritzgutstroms auf den Tellerstössel 110 bildet, ein Schliessen des Schliessventils 108.

Vorteilhafterweise erfolgen der erste und der bisherige Ablauf des zweiten Verfahrenschrittes unter teilweiser Überlappung, um die Zyklusdauer so kurz wie möglich zu halten.

Während des Einströmens bleibt der Druck auf das Schliessventil 108 durch das nachkommende Spritzgut aufrecht. Dieses strömt durch die Fellkavität 44 zu den Zulaufsenken 74 und tritt durch die Zuflussmündungen 68 in die Nutzenkavitäten 62 ein. Sind die Nutzenkavitäten 62 und die Fellkavitäten 44 gefüllt, so geht der Volumenstrom gegen null, allerdings wird durch die Spritzgiessmaschine das Spritzgut unter hohen Druck gesetzt, das Schliessventil 108 bleibt geschlossen. Sobald das Spritzgut durch den Aushärte- beziehungsweise Verfestigungsprozess eine bestimmte Festigkeit erreicht hat, und der Spritzling 50 ausgebildet ist, fällt der Druck ab, das Schliessventil 108 bleibt jedoch geschlossen, da eine Bewegung durch das nun feste Spritzgut behindert ist.

Nach erfolgtem Aushärten des Spritzguts zum Spritzling 50 beginnt mit einem dritten Verfahrensschritt der Entformvorgang. In diesem dritten Verfahrensschritt wird die Stirnformplatte 80 durch die bewegliche Seite der Spritzgiessmaschine um einen vorbestimmten Hub bewegt, die Schaftformplatte 82 verbleibt aufgrund der Adhäsion am Spritzling 50 und die Nutzenplattenanordnung 56 öffnet sich, sodass der Spaltraum 114 gebildet wird. Das Spritzgiesswerkzeug 10 ist entlastet. Der Spritzling 50 ist nach wie vor im nach aussen geschlossenen Spritzgiesswerkzeug 10 eingeschlossen, lediglich die Kopfbereiche 116 der Nutzen 12 kragen frei in den Spaltraum 114. Parallel zu der Bewegung wird im dritten Verfahrensschritt im sich ausbildenden Spaltraum 114 ein Überdruck aufgebaut, indem Druckluft durch den Druckgaskanal 118 eingebracht wird.

In einem vierten Verfahrensschritt wird die Nutzenplattenanordnung 56 zurückgefahren und das Werkzeug in der zweiten Trennfläche 58 getrennt. Dabei heben die Schaftformplatten 82 mit ihren Schaftkavitätsabschnitten von den Nutzen 12 ab, sodass diese frei liegen. Die Druckluft im Spaltraum 114 unterstützt dabei den Ausformvorgang der Nutzen 12. Der Hub ist dabei auf die Geometrie der Nutzen 12 derart abgestimmt, dass die Nutzen 12 im anschliessenden Verfahrensschritt nicht räumlich behindert sind. Fig. 2 zeigt den Endzustand nach diesem Verfahrensschritt.

Alternativ wäre statt Druckluft auch ein anderes Gas denkbar.

In einem weiteren Verfahrensschritt wird die Mittenplatte 40 um einen definierten Hub, welcher mindestens der Länge jedes Kernes 90 im Schaft eines Nutzens 12 entspricht, translatorisch bewegt, und dabei in der ersten Trennfläche 42 von der Fellplatte 24 abgehoben. Dabei wirkt die Mittenplatte 40 an ihren Stützflächen 60 aufgrund des vorhandenen Formschlusses auf die dem freien Ende abgewandten ringförmigen Stirnflächen der Nutzen 12 und reisst diese im Bereich der Zuflussmündung 68, aufgrund der dort vorhandenen Sollbruchstelle 94, vom gemeinsamen Fell 48 ab, indem die Zugfestigkeit des Spritzlings 50 überschritten wird. Hierbei ist es in den meisten Fällen möglich, die Zugfestigkeit zu beeinflussen, indem entsprechende Temperaturzustände durch entsprechende Wartezeiten beim Verfestigungsvorgang gewählt werden.

Um die durch das Abreissen nur lose auf dem Kern 90 sitzenden Nutzen 12 von ebendiesen abziehen zu können, werden die Nutzen 12 dank des entsprechenden Hubes der Mittenplatte 40 von den Kernen 90 abgezogen. Sobald der Halt der Kerne 90 verloren gegangen ist, fallen die Nutzen 12 aufgrund der Schwerkraft nach unten und können von einer nicht dargestellten Einrichtung aufgefangen werden.

In Fällen, bei denen Nutzen 12 ohne Bohrung hergestellt werden, wäre der Hub der Mittenplatte 40 auf ein Minimum zu begrenzen, da die Nutzen 12 sofort nach dem Abreissen aufgrund der Schwerkraft aus dem Spritzgiesswerkzeug 10 fallen.

Die Bewegung der Mittenplatte 40 erfolgt im vorliegenden Fall gemäss Fig. 1 durch Mittenplattenzylinder 122, welche ausserhalb der Mittenplatte 40 symmetrisch angebracht sind. Alternativ wären andere Aktuatoren denkbar, es wäre jedoch auch möglich, eine Zwangsmitnahme mit der Nutzenplattenanordnung 56 zu realisieren. Da im vorliegenden Fall die Führungssäulen 30 zu kurz sind, um über den gesamten Hub die Mittenplatte 40 zu führen, muss diese Zwangsführung von den Mittenplattenylindern 122 oder anderen, nicht dargestellten Einrichtungen, übernommen werden. Alternativ wäre es auch möglich, die Führungssäulen 30 länger zu gestalten, wenn dies räumlich möglich ist.

Damit ein Abreissen der Nutzen 12 überhaupt stattfinden kann, muss sich das Fell 48 beim Abheben der Mittenplatte 40 von dessen Oberflächenanteil an der Fellkavität 44 ablösen und in derjenigen der Fellplatte 24 haften bleiben. Damit dies der Fall ist, muss die Rückhaltekraft, bestehend aus Summe der in Bewegungsrichtung wirkenden Reib- und Adhäsionskräfte zwischen Fell 48 und Fellplatte 24 und der Kerne 90, im Bereich der Fellkavität 44 grösser sein als die Summe der Gegenkräfte umfassend die Kraft für das Abreissen der Nutzen 12 plus der Adhäsionskräfte zwischen Fell 48 und Mittenplatte 40 plus der Reibkräfte der Nutzen 12 auf entsprechenden Abschnitten der Kerne 90.

Damit diese Rückhaltekraft entsprechend hoch ist, sind in der Hohlform der Fellplatte 24 die Ringspalte 110 ausgebildet, welche beim Spritzen des Felles 48 auf der nutzenabgewandten Seite Anformungen, im speziellen Fall Hohlnoppen 98, mitbilden und so die Ausbildung von grösseren Reibflächen erreicht ist.

Da die zusätzlichen Reibflächen kontinuierlich über das Fell 48 verteilt sind, ist die Gefahr, dass bei nicht ausreichend stabilen Fellen 48 aufgrund von auftretenden Scherkräften innerhalb des Felles 48 ein Zerreissen derselben und ein unvollständiges Ausformen der Nutzen 12 auftritt, vermindert.

Da die Fellkavität 44 nun geöffnet ist, liegt der verbleibende Rest des Spritzlings 50 frei zugänglich in der Hohlform der Fellplatte 24.

Im vorliegenden Fall werden somit die Hohlnoppen 98 konzentrisch zu den Zuflussmündungen 68 mitgeformt, womit allenfalls auftretende Scherkräfte auf das Fell 48 minimiert sind und das Fell 48 in der Lage ist, einen ausreichenden Widerstand entgegenzusetzen.

Von Vorteil ist deshalb auch, die Hohlform für den flächigen, kreisrunden Grundkörper des Felles 48 in der Fellplatte 24 auszubilden, damit das Fell 48 an seinem Aussenrand zusätzlichen Halt erfährt.

Die Fellplatte 24 ist vorzugsweise als selbstständig bewegbare Einheit ausgebildet und wird an Buchsen 76 durch die Führungssäulen 30 über den gesamten notwendigen Hub geführt. Die translatorische Bewegung erfolgt dadurch fluchtend zu derjenigen der Mittenplatte 40. Im vorliegenden Fall erfolgt die Hubbetätigung der Fellplatte 24 durch eine Zwangsmitnahme über Hubbegrenzer 128 an der Mittenplatte 40 und wird von diesen quasi gezogen. Hat die Mittenplatte 40 einen bestimmten Weg zurückgelegt, wird durch die Hubbegrenzung die Fellplatte 24 gefasst und translatorisch um einen bestimmten Weg mitbewegt. Über diese Hubbegrenzer 128 ist der maximale Abstand zwischen Mittenplatte 40 und Fellplatte 24 definiert. Vorteilhafterweise bleibt diese Zwangsführung über den gesamten Hub erhalten. Durch diesen Vorgang wird das in der Fellplatte 24 befindliche Fell 48 von den, in der Basisplatte 22 fest stehenden, Kernen 90 abgezogen und gleichzeitig der mit dem Fell 48 verbundene Anguss 46 aus dem Angusskanal 34 ausgeformt. Dieser Zustand ist in Fig. 4 dargestellt. Da nun der Widerstand an den Kernen 90 entfällt, kann das Fell 48 mit dem Anguss 46 leicht aus der Hohlform der Fellplatte 24 entnommen werden. Dies kann manuell oder mittels eines automatisierten Manipulators geschehen. Selbstverständlich wäre alternativ auch ein eigenständiger Antrieb für die Fellplatte 24 denkbar.

In diesem Zustand befindet sich das Spritzgiesswerkzeug 10 in totaler Offenstellung und alle seine bewegbaren Komponenten sind voneinander getrennt, jedoch fluchtend zueinander ausgerichtet.

In dieser Stellung können verschiedene Arbeitsschritte wie Kontrolle und Reinigung der Kavitäten oder die Aufbringung eines Trennmittels notwendig sein.

Als letzter Verfahrensschritt zum Abschluss des Zyklus erfolgt die Schliessbewegung des Spritzgiesswerkzeugs 10 ausgehend von der Offenstellung in Fig. 4.

Dabei wird zuerst die Mittenplatte 40 mittels der Mittenplattenzylinder 122 retour in Richtung der Basisplattenanordnung 20 bewegt. Die Retourbewegung der Mittenplatte 40 kann vorzugsweise durch die Mittenplattenzylinder 122 erfolgen, allerdings wären auch alternative elektrische, mechanische oder pneumatische Antriebsmöglichkeiten denkbar.

Im Anschluss daran, oder in zeitlicher Überlappung, erfolgt die Retourbewegung der Nutzenplattenanordnung 56 mittels des beweglichen Teils der Spritzgiessmaschine bis zur Anlage an der Mittenplatte 40 in der zweiten Trennfläche 58. In einer bevorzugten Ausführungsform gelangt dabei zuerst die Schaftformplatte 82 an der Mittenplatte 40 in Anlage, und erst im Anschluss daran die Stirnformplatte 80 an der Schaftformplatte 82, währenddessen erfolgt das Schliessen des Spaltraumes 114.

Bei einem alternativen Bewegungsablauf wird zuerst die Nutzenplattenanordnung 56 in Richtung zur Basisplattenanordnung 20 durch den beweglichen Teil der Spritzgiessmaschine zurückbewegt, hierbei gelangt sie auf ihrem Retourweg an der Mittenplatte 40 in der zweiten Trennfläche 58 in Anlage, wobei in einer bevorzugten Ausführungsform zuerst die Schaftformplatte 82 in Anlage gelangt, und erst im Anschluss daran die Stirnformplatte 80, währenddessen erfolgt das Schliessen des Spaltraumes 114. Mit erfolgter vollflächiger Anlage im Bereich der zweiten Trennfläche 58 erfolgt die Zwangsmitnahme der Mittenplatte 40. Dabei müssen die die Mittenplattenzylinder 122 kraftlos bewegbar sein, und dürfen nicht der Bewegung entgegenwirken. In diesem Fall sind deshalb einfach wirkende Zylinder ausreichend. Alternativ könnte anstatt der Zwangsmitnahme auch ein selbständiges Verfahren der Mittenplatte 40 in Schliessstellung erfolgen, indem die Mittenplattenzylinder 122 doppeltwirkend ausgeführt werden und den Retourhub bewerkstelligen. Weitere Mechanismen sind denkbar.

Auf dem weiteren Rückweg in Richtung der Schliessstellung gelangt die Fellplatte 24 in der ersten Trennfläche 42 in Anlage, sodass die Fellkavität 44 geschlossen wird, und aufgrund einer Zwangsmitnahme die Fellplatte 24 gemeinsam mit Mittenplatte 40 und Nutzenplattenanordnung 56 zurück in die Schliessstellung verfährt, bis eine vollflächige Anlage an der Basisplatte 22 gegeben ist. Die Kerne 90 dringen dabei durch die entsprechenden Fellbohrungen 99 der Fellplatte 24 in die geschlossene Fellkavität 44 und die Nutzenkavitäten 62 hinein. Damit dies problemlos möglich ist, ist eine sehr genaue Führung relativ zueinander nötig, und die empfindlichen Kerne 90 dürfen keine Deformationen aufweisen.

Das Spritzgiesswerkzeug 10 ist nun vollständig geschlossen und die einzelnen Komponenten werden durch eine vorbestimmte Schliesskraft der Spritzgiessmaschine zueinander in Anlage gehalten. Das Spritzgiesswerkzeug 10 ist nun wieder in Ausgangsstellung und bereit für den nächsten Zyklus.

## Patentansprüche

1. Spritzgiesswerkzeug mit einer, einen zum Anschluss an eine Spritzgiessmaschine bestimmten Angusskanal (34) aufweisenden Basisplattenanordnung (20), einer - im geschlossenen Zustand des Spritzgiess-werkzeugs (10) - in einer ersten Trennfläche (42) an der Basisplattenanordnung (20) anliegenden und zusammen mit dieser eine mit dem Angusskanal (34) verbundene Fellkavität (44) ausbildenden Mittenplatte (40), und einer - im geschlossenen Zustand des Spritzgiesswerkzeugs (10) - in einer zweiten Trennfläche (58) an der Mittenplatte (40) anliegenden, zusammen mit dieser eine Anzahl Nutzenkavitäten (62) begrenzenden und an dem beweglichen Teil der Spritzgiessmaschine angeordnet zu sein bestimmten Nutzenplattenanordnung (56), wobei die Nutzenkavitäten (62), zum Befüllen mit Spritzgut, über je eine an der Mittenplatte (40) ausgebildete Zuflussmündung (68) mit der Fellkavität (44) verbunden sowie mittels je einer, an der Mittenplatte (40) ausgebildeten und ringförmig um die Zuflussmündung (68) herum verlaufenden Stützfläche (60) begrenzt sind, wobei die Nutzenplattenanordnung (56) aus zumindest einer Stirnformplatte (80) und einer Schaftformplatte (82) besteht, wobei letztere - im geschlossenen Zustand des Spritzgiesswerkzeugs (10) - einerseits in der zweiten Trennfläche (58) an der Mittenplatte (40) und andererseits an der Stirnformplatte (80) anliegt, **dadurch gekennzeichnet, dass** die Stützflächen (60) die erzeugten Nutzen (12) derart stützen, dass beim Öffnen des Spritzgiesswerkzeugs (10) in der ersten Trennfläche (42) - nachdem die Nutzenplattenanordnung (56) zurückgefahren und das Spritzgiesswerkzeug (10) in der zweiten Trennfläche (58) getrennt worden ist, wobei die Schaftformplatte (82) mit ihren Schaftkavitätsabschnitten von den Nutzen (12) abhebt, sodass diese frei liegen - sich die Nutzen (12) von dem in der Fellkavität (44) erzeugten Fell (48) trennen.

2. Spritzgiesswerkzeug nach Anspruch 1, **dadurch gekennzeichnet, dass** in der Basisplattenanordnung (20) je Nutzenkavität (62) ein stiftförmiger - insbesondere einen Kreisquerschnitt aufweisenden - Kern (90) fest und frei auskragend eingebracht ist, welcher durch die Zuflussmündung (68) hindurch in die betreffende Nutzenkavität (62) hineinragt.

3. Spritzgiesswerkzeug nach Anspruch 2, **dadurch gekennzeichnet, dass** zwischen dem Kern (90) und der Zuflussmündung (68) ein ringförmiger Zuflussquerschnitt (92) ausgebildet ist, welcher koaxial zum Kern (90) positioniert ist.

4. Spritzgiesswerkzeug nach Anspruch 3, **dadurch gekennzeichnet, dass** die Stützfläche (60) wenigstens das 5-fache, vorzugsweise mehr als das 10-fache des Zuflussquerschnitts (92) beträgt.

5. Spritzgiesswerkzeug nach einem der Ansprüche 1-4, **dadurch gekennzeichnet, dass** die Fellkavität (44) einen flächigen Kavitätsabschnitt aufweist, in welchen der Angusskanal (34) mündet, und ausgehend von welchem zu jeder Zuflussmündung (68) zugehörige Zulaufsenken (74) in der Mittenplatte (40) ausgebildet sind, welche über den gesamten Querschnitt der Mittenplatte (40) hindurchreichen und sich in Richtung der jeweiligen Zuflussmündung (68) verjüngen.

6. Spritzgiesswerkzeug nach einem der Ansprüche 1 bis 5, **dadurch gekennzeichnet, dass** die Stirnformplatte (80) dazu bestimmt ist, an dem bewegbaren Teil der Spritzgiessmaschine angeordnet zu sein, und die Schaftformplatte (82) an der Stirnformplatte (80) um einen vorbestimmten Hub begrenzt verschiebbar gelagert sowie vorzugsweise in Richtung auf die Mittenplatte (40) zu vorgespannt ist.

7. Spritzgiesswerkzeug nach Anspruch 6, **dadurch gekennzeichnet, dass** die Stirnformplatte (80) an der Schaftformplatte (82) anliegt und sich beim Öffnen des Spritzgiesswerkzeugs (10) zwischen der Stirn- (80) und der Schaftformplatte (82) ein ansonsten wenigstens annähernd geschlossener Spaltraum (114) ausbildet.

8. Spritzgiesswerkzeug nach Anspruch 7, **dadurch gekennzeichnet, dass** ein Druckgaskanal (118), welcher dazu bestimmt ist, mit einer Druckluftquelle verbunden zu sein, vorzugsweise durch die Stirnformplatte (80) in den Spaltraum (114) führt.

9. Spritzgiesswerkzeug nach einem der Ansprüche 1 bis 8, **dadurch gekennzeichnet, dass** ein von der Stützfläche (60) abgewandter Stirnbereich der Nutzenkavitäten (62) an der Stirnformplatte (80) und ein an diesen angrenzender Schaftbereich (88) der Nutzenkavitäten (62) in der Schaftformplatte (82) ausgebildet sind.

10. Spritzgiesswerkzeug nach einem der Ansprüche 1 bis 9, **dadurch gekennzeichnet, dass** die Mittenplatte (40) mit einem Antrieb verbunden ist, der dazu bestimmt ist, die Mittenplatte (40) zusammen mit den Nutzen (12) vom Fell (48) zu trennen, und gegebenenfalls der Hub der Mittenplatte (40) derart gewählt ist, dass ein Trennen der Nutzen (12) vom Kern (90) gewährleistet ist.

11. Spritzgiesswerkzeug nach einem der Ansprüche 1 bis 10, **dadurch gekennzeichnet, dass** ein in die Fellkavität (44) mündender Unterdruckkanal (112) vorhanden ist, welcher dazu bestimmt ist, mit einer Unterdruckquelle verbunden zu sein.

12. Spritzgiesswerkzeug nach Anspruch 11, **dadurch gekennzeichnet, dass** der Unterdruckkanal (112) ein bei seiner Mündung in die Fellkavität (44) angeordnetes selbstöffnendes Schliessventil (108) enthält, welches gegenüber dem Angusskanal (34) angeordnet ist und welches beim Eindringen von Spritzgut durch den Angusskanal (34) durch dieses in Schliessstellung gebracht wird.

13. Spritzgiesswerkzeug nach einem der Ansprüche 1 bis 12, **dadurch gekennzeichnet, dass** die Fellkavität (44) in der Basisplattenanordnung (20) konkave oder konvexe Ausprägungen mit vorteilhafterweise mehrheitlich achsparallelen Oberflächenbereichen aufweist, und somit einem allfälligen Ausbringen des Felles (48) einen definierten Widerstand entgegensetzen.

14. Spritzgiesswerkzeug nach Anspruch 13, **dadurch gekennzeichnet, dass** der definierte Widerstand in Richtung der Öffnungs- und Schliessbewegung des Spritzgiesswerkzeugs (10) wenigstens gleich gross ist wie die Summe der Adhäsionskräften des Teilbereichs der Fellkavität (44) in der Mittenplatte (40) plus der notwendigen Kräfte zum Abriss der Nutzen (12).

15. Spritzgiesswerkzeug nach Anspruch 2 und 13 oder Anspruch 2 und 14, **dadurch gekennzeichnet, dass** die Ausprägungen durch konzentrische Ringspalte (24) gebildet sind, deren Innendurchmesser durch die Kerne (90) und deren Aussendurchmesser durch übergrosse, durchgängige und zu den Kernen (90) koaxial verlaufende Fellbohrungen (99) bestimmt sind.

16. Verfahren zum Spritzgiessen einer Anzahl Nutzen (12) in einer Anzahl an Nutzenkavitäten (62), aufweisend folgende Schritte:
- Bereitstellen eines Spritzgiesswerkzeugs (10) gemäss einem der Ansprüche 2 bis 15 in geschlossenem Zustand;
- Einspritzen von Spritzgut durch den Angusskanal (34) in die Fellkavität (44) und in alle Nutzenkavitäten (62) unter Ausbildung eines zusammenhängenden Spritzlings (50) mit einem Anguss (46), einem in der Fellkavität (44) erzeugten Fell (48) und den in den Nutzenkavitäten (62) erzeugten Nutzen (12);
- Belassen des Spritzgiesswerkzeugs (10) unter Kontrolle der Temperatur über einen bestimmten Zeitraum bis zum Erreichen eines formstabilen Zustandes des so erhaltenen Spritzlings (50);
- Öffnen des Spritzgiesswerkzeugs (10) in der ersten Trennfläche (42) um einen vorbestimmten Hubweg, wobei zu Beginn dieses Hubweges ein Trennen der Nutzen (12) vom Fell (48) in der Ebene der Stützfläche (60) erfolgt, wobei
beim Öffnen des Spritzgiesswerkzeugs (10) die Mittenplatte (40) um einen vorbestimmten Hubweg abgehoben wird, wobei der Hubweg derart gewählt ist, dass ein Abschieben der Nutzen (12) von den Kernen (90) gewährleistet ist, und dass die Öffnung des Spritzgiesswerkzeugs (10) zweistufig erfolgt, wobei in der ersten Stufe die Nutzenplattenanordnung (56) in der zweiten Trennfläche (58) abgehoben wird, wodurch ein Öffnen der Nutzenkavitäten (62) bewirkt wird, und in der zweiten Stufe die Mittenplatte (40) in der ersten Trennfläche (42) abgehoben wird, wobei die Nutzen (12) vom Fell (48) getrennt werden.

## Claims

1. Injection-molding tool with a baseplate arrangement (20), which has a runner (34) intended for connection to an injection-molding machine, a central plate (40), which - in the closed state of the injection-molding tool (10) - lies against the baseplate arrangement (20) in a first separating area (42) and together with said baseplate arrangement forms a skin cavity (44) connected to the runner (34), and a blank plate arrangement (56), which - in the closed state of the injection-molding tool (10) - lies against the central plate (40) in a second separating area (58), with said central plate (40) delimits a number of blank cavities (62) and is intended to be arranged on the movable part of the injection-molding machine, the blank cavities (62) being connected to the skin cavity (44) by way of a respective inflow mouth (68) formed on the central plate (40) for filling with molding material, and being delimited by means of a respective supporting area (60), which is formed on the central plate (40) and runs in an annular manner around the inflow mouth (68), wherein the blank plate arrangement (56) consists of at least one end mold plate (80) and one shaft mold plate (82), the latter - in the closed state of the injection-molding tool (10) - lying on the one hand against the central plate (40) in the second separating area (58) and on the other hand against the end mold plate (80), **characterized in that** the supporting areas (60) support the created blanks (12) in such a way that, during the opening of the injection-molding tool (10) in the first separating area (42) - after the blank plate arrangement (56) has been returned and the injection-molding tool (10) has been separated in the second separating area (58), whereby the shaft mold plate (82) lifts off with its shaft cavity portions from the blanks (12), so that the latter are exposed - the blanks (12) become separated from the skin (48) created in the skin cavity (44).

2. Injection-molding tool as claimed in claim 1, **characterized in that**, for each blank cavity (62) a pin-shaped core (90) - in particular having a circular cross-section - is fixed in the baseplate arrangement (20) in a freely projecting manner and protruding into the relevant blank cavity (62) through the inflow mouth (68).

3. Injection-molding tool as claimed in claim 2, **characterized in that** an annular inflow cross section (92), which is positioned coaxially in relation to the core (90), is formed between the core (90) and the inflow mouth (68).

4. Injection-molding tool as claimed in claim 3, **characterized in that** the supporting area (60) is at least 5 times, preferably more than 10 times, the inflow cross section (92).

5. Injection-molding tool as claimed in one of claims 1-4, **characterized in that** the skin cavity (44) has a two-dimensional cavity portion, into which the runner (34) opens out, and from which feed impressions (74) belonging to each inflow mouth (68) are formed in the central plate (40) that reach over the entire cross section of the central plate (40) and narrow in the direction of the respective inflow mouth (68).

6. Injection-molding tool as claimed in one of claims 1 to 5, **characterized in that** the end mold plate (80) is intended to be arranged on the movable part of the injection-molding machine, and the shaft mold plate (82) is mounted displaceably to a limited extent by a predetermined amount of travel on the end mold plate (80) and is preferably prestressed in the direction of the central plate (40).

7. Injection-molding tool as claimed in claim 6, **characterized in that** the end mold plate (80) lies against the shaft mold plate (82) and that, during the opening of the injection-molding tool (10), a gap (114) that is otherwise at least approximately closed forms between the end mold plate (80) and the shaft mold plate (82).

8. Injection-molding tool as claimed in claim 7, **characterized in that** a compressed-gas channel (118), which is intended to be connected to a compressed-air source, preferably passes through the end mold plate (80) into the gap (114).

9. Injection-molding tool as claimed in one of claims 1 to 8, **characterized in that** an end region of the blank cavities (62) that is situated away from the supporting area (60) is formed on the end mold plate (80) and a shaft region (88) of the blank cavities (62) that is adjacent said end region is formed in the shaft mold plate (82).

10. Injection-molding tool as claimed in one of claims 1 to 9, **characterized in that** the central plate (40) is connected to a drive which is intended to separate the central plate (40) together with the blanks (12) from the skin (48), and if needed the travel of the central plate (40) is chosen such that separation of the blanks (12) from the core (90) is ensured.

11. Injection-molding tool as claimed in one of claims 1 to 10, **characterized in that** a negative-pressure channel (112) is present, opening out into the skin cavity (44) and intended to be connected to a negative-pressure source.

12. Injection-molding tool as claimed in claim 11, **characterized in that** the negative-pressure channel (112) contains a self-opening closing valve (108), which is arranged at the mouth of said channel (112) into the skin cavity (44), is arranged opposite the runner (34) and, when molding material penetrates through the runner (34), is brought into the closed position by said material.

13. Injection-molding tool as claimed in one of claims 1 to 12, **characterized in that** the skin cavity (44) in the baseplate arrangement (20) has concave or convex formations with advantageously predominantly axially parallel surface regions, and consequently offers a defined resistance to any discharge of the skin (48).

14. Injection-molding tool as claimed in claim 13, **characterized in that** the defined resistance in the direction of the opening and closing movement of the injection-molding tool (10) is at least equal to the sum of the adhesive forces of the partial region of the skin cavity (44) in the central plate (40) plus the necessary forces for tearing off the blanks (12).

15. Injection-molding tool as claimed in claims 2 and 13 or in claims 2 and 14, **characterized in that** the formations are formed by concentric annular slits (24), the inside diameters of which are determined by the cores (90) and the outside diameters of which are determined by oversized skin bores (99) extending right through and running coaxially in relation to the cores (90).

16. Process for injection molding a number of blanks (12) in a number of blank cavities (62), having the following steps:
- providing an injection-molding tool (10) as claimed in one of claims 2 to 15 in a closed state;
- injecting molding material through the runner (34) into the skin cavity (44) and into all the blank cavities (62) to form a contiguous molding (50) with a sprue (46), a skin (48) created in the skin cavity (44) and the blanks (12) created in the blank cavities (62);
- leaving the injection-molding tool (10) for a certain time while monitoring the temperature until a dimensionally stable state of the molding (50) obtained in this way is achieved;
- opening the injection-molding tool (10) in the first separating area (42) by a predetermined amount of travel, separation of the blanks (12) from the skin (48) taking place in the plane of the supporting area (60) at the beginning of this travel, wherein
during the opening of the injection-molding tool (10), the central plate (40) is lifted off by a predetermined amount of travel, the amount of travel being chosen such that pushing-off of the blanks (12) from the cores (90) is ensured, and wherein the opening of the injection-molding tool (10) takes place in two stages, in the first stage the blank plate arrangement (56) being lifted off in the second separating area (58), whereby opening of the blank cavities (62) is brought about, and in the second stage the central plate (40) being lifted off in the first separating area (42), the blanks (12) being separated from the skin (48).

## Revendications

1. Moule d'injection avec un arrangement de plaques de base (20), qui présente un canal de coulée (34) prévu pour la connexion à une machine de moulage par injection, une plaque centrale (40) qui - dans l'état fermé du moule d'injection (10) - est ajustée contre l'arrangement de plaques de base (20) dans une première zone de séparation (42) et forme avec cet arrangement de plaques de base (20) une cavité de peau (44) connectée au canal de coulée (34), et un arrangement de plaques de moulage (56) qui - dans l'état fermé du moule d'injection (10) - est ajusté contre la plaque centrale (40) dans une deuxième zone de séparation (58), délimite avec cette plaque centrale (40) un nombre de cavités de moulage (62) et est prévu pour être arrangé sur la partie mobile de la machine de moulage par injection, les cavités de moulage (62) étant connectées à la cavité de peau (44) chacune au moyen d'une bouche d'entrée (68) formée sur la plaque centrale (40) pour être remplies avec du matériau d'injection, et chacune étant délimitée au moyen d'une surface de support (60), qui est formée sur la plaque centrale (40) et s'étend de façon annulaire autour de la bouche d'entrée (68), l'arrangement de plaques de moulage (56) consistant en au moins une plaque de moulage frontale (80) et une plaque de moulage de tige (82), cette dernière
- dans l'état fermé du moule d'injection (10) - étant ajustée d'un côté contre la plaque centrale (40) dans la deuxième zone de séparation (58) et d'un autre côté contre la plaque de moulage frontale (80), **caractérisé en ce que** les surfaces de support (60) supportent les moulages (12) créés de telle façon que lors de l'ouverture du moule d'injection (10) dans la première zone de séparation (42) - après que l'arrangement de plaques de moulage (56) est ramené et le moule d'injection (10) est séparé dans la deuxième zone de séparation (58), la plaque de moulage de tige (82) se décollant avec ses parties de cavité de tige des moulages (12), de telle sorte que ces derniers sont libres - les moulages (12) se séparent de la peau (48) créée dans la cavité de peau (44).

2. Moule d'injection selon la revendication 1, **caractérisé en ce que**, dans l'arrangement de plaques de base (20), pour chaque cavité de moulage (62) un noyau (90) en forme de tige - en particulier présentant une section transversale circulaire - est fixé et est en saillie librement, lequel se prolonge à travers la bouche d'entrée (68) dans la cavité de moulage (62) concernée.

3. Moule d'injection selon la revendication 2, **caractérisé en ce qu'**une section transversale d'entrée (92) de forme annulaire, qui est positionnée coaxialement par rapport au noyau (90), est formée entre le noyau (90) et la bouche d'entrée (68).

4. Moule d'injection selon la revendication 3, **caractérisé en ce que** la surface de support (60) est au moins 5 fois, préférablement plus de 10 fois, la section transversale d'entrée (92).

5. Moule d'injection selon l'une des revendications 1-4, **caractérisé en ce que** la cavité de peau (44) présente une partie de cavité plane, dans laquelle le canal de coulée (34) débouche, et de laquelle des fraisures d'entrée (74) appartenant à chaque bouche d'entrée (68) sont formées dans la plaque centrale (40), lesquelles traversent la section transversale complète de la plaque centrale (40) et se rétrécissent dans la direction des bouches d'entrée (68) respectives.

6. Moule d'injection selon l'une des revendications 1 à 5, **caractérisé en ce que** la plaque de moulage frontale (80) est prévue pour être arrangée sur la partie mobile de la machine de moulage par injection, et la plaque de moulage de tige (82) est positionnée de façon ajustable dans la limite d'un déplacement prédéterminé sur la plaque de moulage frontale (80) et est préférablement précontrainte dans la direction de la plaque centrale (40).

7. Moule d'injection selon la revendication 6, **caractérisé en ce que** la plaque de moulage frontale (80) est ajustée contre la plaque de moulage de tige (82) et, lors de l'ouverture du moule d'injection (10), un espace de séparation (114) qui est sinon au moins approximativement fermé se forme entre la plaque de moulage frontale (80) et la plaque de moulage de tige (82).

8. Moule d'injection selon la revendication 7, **caractérisé en ce qu'**un canal de gaz comprimé (118) prévu pour être connecté à une source d'air comprimé conduit préférablement à travers la plaque de moulage frontale (80) dans l'espace de séparation (114).

9. Moule d'injection selon l'une des revendications 1 à 8, **caractérisé en ce qu'**une région frontale des cavités de moulage (62) opposée à la surface de support (60) est formée sur la plaque de moulage frontale (80) et une région de tige (88) des cavités de moulage (62) adjacente à cette région frontale est formée dans la plaque de moulage de tige (82).

10. Moule d'injection selon l'une des revendications 1 à 9, **caractérisé en ce que** la plaque centrale (40) est connectée à un entraînement qui est prévu pour séparer la plaque centrale (40) avec les moulages (12) de la peau (48), et si nécessaire le déplacement de la plaque centrale (40) est choisi de telle sorte qu'une séparation entre les moulages (12) et le noyau (90) est assuré.

11. Moule d'injection selon l'une des revendications 1 à 10, **caractérisé en ce qu'**un canal de dépression (112) débouchant dans la cavité de peau (44) est présent, lequel est prévu pour être connecté à une source de dépression.

12. Moule d'injection selon la revendication 11, **caractérisé en ce que** le canal de dépression (112) contient une valve de fermeture à ouverture automatique (108) disposée à l'embouchure dudit canal (112) dans la cavité de peau (44) et disposée en face du canal de coulée (34) et qui, lors de l'entrée du matériau d'injection par le canal de coulée (34), est amenée en position de fermeture par ce dit matériau d'injection.

13. Moule d'injection selon l'une des revendications 1 à 12, **caractérisé en ce que** la cavité de peau (44) dans l'arrangement de plaques de base (20) présente des formations concaves ou convexes avec de façon avantageuse majoritairement des régions de surface axialement parallèles, et ainsi offre une résistance définie à un éventuel retrait de la peau (48).

14. Moule d'injection selon la revendication 13, **caractérisé en ce que** la résistance définie dans la direction du mouvement d'ouverture et de fermeture du moule d'injection (10) est au moins aussi grande que la somme des forces d'adhésion de la région partielle de la cavité de peau (44) dans la plaque centrale (40) plus les forces nécessaires pour arracher les moulages (12).

15. Moule d'injection selon les revendications 2 et 13 ou selon les revendications 2 et 14, **caractérisé en ce que** les formations sont formées par des fentes annulaires (24) concentriques, dont les diamètres intérieurs sont déterminés par les noyaux (90) et les diamètres extérieurs sont déterminés par des perçages de peau (99) surdimensionnés, qui traversent et s'étendent coaxialement par rapport aux noyaux (90).

16. Procédé de moulage par injection d'un nombre de moulages (12) dans un nombre de cavités de moulage (62), présentant les étapes suivantes:
- préparation d'un moule d'injection (10) selon l'une des revendications 2 à 15 dans un état fermé;
- injection de matériau d'injection par le canal de coulée (34) dans la cavité de peau (44) et dans toutes les cavités de moulage (62) pour former une pièce moulée par injection (50) d'un seul tenant avec une coulée (46), une peau (48) créée dans la cavité de peau (44) et des moulages (12) créés dans les cavités de moulage (62);
- maintien du moule d'injection (10) pendant un certain temps en contrôlant la température jusqu'à atteindre un état dimensionnellement stable de la pièce moulée par injection (50) obtenue de cette façon;
- ouverture du moule d'injection (10) dans la première zone de séparation (42) d'une distance de déplacement prédéterminée, une séparation des moulages (12) de la peau (48) ayant lieu dans le plan de la surface de support (60) au début de ce déplacement, dans lequel
lors de l'ouverture du moule d'injection (10), la plaque centrale (40) est soulevée d'une distance de déplacement prédéterminée, la distance de déplacement étant choisie de telle sorte que l'extraction des moulages (12) des noyaux (90) est assurée,
et dans lequel l'ouverture du moule d'injection (10) a lieu en deux étapes, l'arrangement de plaques de moulage (56) étant soulevé dans la première étape dans la deuxième zone de séparation (58), ce qui provoque l'ouverture des cavités de moulage (62), et la plaque centrale (40) étant soulevée dans la deuxième étape dans la première zone de séparation (42), les moulages (12) étant séparés de la peau (48).
